# EUROPEAN PATENT SPECIFICATION

(11) **EP 2 337 254 B1**
(45) Date of publication and mention of the grant of the patent: **08.02.2012**
(21) Application number: 09290944.9
(22) Date of filing: 15.12.2009
(51) Int. Cl.: H04J 3/16, H04Q 11/00

(54) **Digital multi-rate receiver**
Digitaler Mehrratenempfänger
Récepteur multidébit numérique

(43) Date of publication of application: 22.06.2011
(73) Proprietor: Alcatel Lucent, 75008 Paris (FR)
(72) Inventor: Poehlmann, Wolfgang, 71282 Hemmingen (DE); Heron, Ronald, Québec (CA)
(74) Representative: Schmidt, Werner Karl

(56) References cited:
- EP-A1- 2 066 066
- US-B1- 7 593 418

## Description

The present invention relates to digital multi rate receivers. In particular, it relates to digital dual rate receivers for passive optical networks (PON).

Early work on efficient fiber to the home architectures was done in the 1990s by the Full Service Access Network (FSAN) working group, formed by major telecommunications service providers and system vendors. The International Telecommunications Union (ITU) did further work, and has since standardized several generations of passive optical networks. PON is typically a point-to-multipoint, fiber to the premises network architecture in which unpowered passive optical splitters are used to enable a single optical fiber to serve multiple premises, typically 32 up to 128. A PON comprises an Optical Line Termination (OLT) at the service provider's central office and a number of Optical Network Units (ONUs) or Optical Network Terminals (ONT) near end users. A PON configuration reduces the amount of fiber and central office equipment required compared with point-to-point (PTP) architectures.

Downstream signals in PON are broadcast to each premise sharing a single feeder fiber. Upstream signals are combined using a Multiple Access Control (MAC) protocol based on Time Division Multiple Access (TDMA). The OLTs configure the served ONTs or ONUs in order to provide time slot assignments for upstream communication.

Different variants of PON architectures have been specified. APON (ATM Passive Optical Network), which was the first passive optical network standard, is used primarily for business applications, and is based on ATM. BPON (Broadband PON) is a standard based on APON. It adds support for additional RF (radio frequency) video services provided on a separate optical channel via WDM, dynamic and higher upstream bandwidth allocation, and survivability. It also created a standard management interface between the OLT and ONU/ONT, enabling mixed-vendor networks. GPON (Gigabit PON), which is an evolution of the BPON standard, supports higher rates, enhanced security, and the choice of the Layer 2 protocol (ATM, TDM and Ethernet). In addition, the IEEE issued an Ethernet PON (EPON or GEPON) standard in 2004, as part of the Ethernet First Mile project. EPON uses standard Ethernet frames with symmetric 1 gigabit per second upstream and downstream rates.

The ITU-T G.984 GPON standard has further increased the total bandwidth and bandwidth efficiency through the use of large, variable-length packets. The standard permits several choices of bitrate, with a major focus on 2.488 gigabits per second (Gbit/s) (2.5G) of downstream bandwidth, and 1.244 Gbit/s (1.25G) of upstream bandwidth. To allow such bandwidth over a distance of 20 km when using a 64-way optical splitter, an optical budget of approx. 28 dB is required.

New PON generations are expected to support bitrates of up to 10 Gbit/s (10G) also for upstream transmission. In order to allow for a smooth transition from GPON or GEPON to 10G PON or 10GPON/10GEPON systems, a coexistence of PON systems at different bitrates is beneficial. As such, it is desirable to provide PON receivers which are capable of receiving PON signals at different bitrates. In particular, it is desirable to provide multi-rate bust-mode PON receivers which can handle 1.25G, 2.5G and 10G upstream signals.

EP 2066066 A1 shows enabling a communication terminal apparatus that does not support high-speed signals to correctly extract clock from a received signal in a network in which a low-speed signal and a high-speed signal having the speed of an integer multiple of the speed of the low-speed signal are time-division multiplexed and transmitted. To achieve the object, an OLT that functions as a communication apparatus includes a pulse generating unit that generates repetitive pulses having the same width as the low-speed signal and a pulse superimposing unit that superimposes the pulses generated by the pulse generating unit on the high-speed signal so that the low-speed clock can be extracted.

US 7593418 B1 shows an apparatus and a method for allocating upstream bandwidth of a shared upstream channel of an optical network, the optical network interconnecting an apparatus with at least a first network unit and a second network unit, the method includes the stages of: (i) receiving requests for transmitting information towards the apparatus; and (ii) issuing data grants in response to at least the requests; wherein at least one data grant authorizes a first network unit to transmit data at a first bit-rate during at least one time-slot and at least one other data grant authorizes a second network unit to transmit data at a second bit-rate during at least one other time-slot, whereas the second bit-rate differs from the first bit-rate.

It should be noted that in the present document, when referring to a 1.25G signal, reference is made to a 1.244 Gbit/s ITU-T PON or a 1.25 Gbit/s IEEE PON signal; when referring to a 2.5G signal, reference is made to a 2.488 Gbit/s ITU-T PON signal; and when referring to a 10G signal, reference is made to a 9.952 Gbit/s ITU-T PON (the actual bitrate is typically 9.95328 Gbit/s) or a 10.3125 Gbit/s IEEE PON signal.

According to an aspect, an optical multi-rate receiver is described. The multi-rate receiver is configured to receive an optical multi-rate signal comprising a first optical signal component at a high bitrate and a second optical signal component at a low bitrate, wherein the first and second optical signal components are time-multiplexed. The multi-rate signal may be a PON signal, which is sent upstream from one or more ONUs to an OLT, wherein the receiver may be placed within the OLT. In a similar manner, the receiver may be placed within intermediate network components, e.g. within regenerating and/or amplifying network components.

The first and second signal component may be optical bursts at different bitrates. The first and second signal component may be multiplexed into different time intervals or time slots of the optical multi-rate signal. Typically, the optical multi-rate signal comprises a plurality of bursts at the low bitrate and a plurality of bursts at the high bitrate. These bursts may be multiplexed into the time intervals in an alternating and/or arbitrary manner. The multiplexing and/or assignment of time intervals to the optical bursts and/or the ONUs may be controlled by the OLT.

The first optical signal component may be at the high bitrate of 9.952 Gbit/s or 2.488 Gbit/s and the second optical signal component may be at the low bitrate of 2.488 Gbit/s or 1.244 Gbit/s. These bitrates may apply to FSAN /ITU-T PON systems. The first optical signal component may be at the high bitrate of 10.3125 Gbit/s and the second optical signal component may be the low bitrate of 1.25 Gbit/s. These bitrates may apply to IEEE PON systems. In an embodiment, the optical multi-rate signal comprises exactly two signal components at different bitrates. In such cases, the receiver may be referred to as a dual-rate receiver.

The optical receiver may comprise a burst-mode avalanche photodiode or another appropriate component configured for performing an optical to electrical conversion of the optical multi-rate signal. The optical receiver may further comprise a transimpedance amplifier and/or a post-amplifier which is configured to amplify the analog electrical signal. The optical receiver may comprise a low pass filter configured to remove undesirable high frequency components of the received analog electrical signal. The cut-off frequency of the low pass filter may be related to the bandwidth of the first optical signal component, i.e. to the high bitrate.

The optical receiver may comprise a high bitrate decision unit configured to generate a digital signal at the high bitrate from the analog electrical signal or a processed, i.e. an amplified and/or filtered, version of the analog electrical signal. For this purpose, the high bitrate decision unit may make use of a constellation associated with a modulation scheme. The modulation scheme is typically the modulation scheme used at a corresponding optical transmitter of a signal component of the optical multi-rate signal. In particular, the modulation scheme may be the modulation scheme used at the corresponding optical transmitter of the first signal component of the optical multi-rate signal.

The above components of the optical receiver, i.e. the burst-mode avalanche photodiode, the transimpedance amplifier, the post-amplifier, the low pass filter and/or the high bitrate decision unit may be part of a high bitrate optical receiver. In an embodiment, the high bitrate optical receiver is a conventional optical receiver for an optical signal comprising only signal components at the high bitrate.

As such, the optical receiver may comprise a high bitrate optical receiver. The high bitrate optical receiver may be configured to convert the optical multi-rate signal into a digital signal having the high bitrate. The optical multi-rate signal comprising the first and the second signal component may be converted into a digital signal having the high bitrate. In other words, not only the first signal component at the high bitrate, but also the second signal component at the low bitrate may be converted into a portion of the digital signal having the high bitrate. The conversion from the optical multi-rate signal into the digital signal may be performed by the components of the high bitrate optical receiver outlined above.

The optical receiver may comprise a post-processing unit which is configured to convert the digital signal corresponding to the second optical signal component into a second digital signal having the low bitrate. The post-processing unit may be configured to identify the portion of the digital signal which corresponds to the second signal component. The information concerning the portion of the optical multi-rate signal and/or the portion of the digital signal which corresponds to the second signal component may be available at the receiver. This information may be derived from the scheduling of the upstream traffic coming from the ONUs onto different time intervals or time slots (e.g. from the MAC protocol). As outlined below, such scheduling is typically performed by the OLT. The portion of the digital signal which corresponds to the second signal component may be identified by the optical receiver from a header or preamble of an optical burst of the second signal component, e.g. through use of a filter. In an embodiment, the post-processing unit is configured to convert the complete digital signal into a second digital signal having a low bitrate. In such cases, the decision regarding which part of the digital signal and the second digital signal corresponds to the first and second signal component may be performed in a digital processing unit.

The post-processing unit may comprise an averaging unit configured to average a plurality of bits of the digital signal. The post-processing unit may comprise a low bitrate decision unit configured to determine a bit of the second digital signal from the plurality, e.g. a predetermined number, of bits of the digital signal. The components of the post-processing unit may be implemented as electrical components and/or the post-processing unit may be implemented as software on a FPGA and/or the post-processing unit may be implemented as an ASIC.

The high bitrate and the low bitrate may have a ratio of N to M. N and M may be integer numbers. N may be greater than M. In an embodiment, N and M may be integral multiples of each other. In particular, M may be one and N may be an integer, e.g. 4 or 8. In an embodiment, the ratio between N and M is a rational number, in particular N may be 33 and M may be 4.

The post-processing unit may be configured to determine a bit of the second digital signal from a plurality of bits of the digital signal. In particular, M bits of the second digital signal may be determined from N bits of the digital signal. In other words, a bit of the second digital signal may be determined from N/M bits of the digital signal.

The post-processing unit may be configured to determine a bit of the second digital signal using an average of a predetermined number of bits of the digital signal. Such predetermined number may be N/M. In particular if the ratio N/M is not an integer number, a bit from the N/M bits of the digital signal may contribute only partially to the bit of the second digital signal. Such partially contributing bits may be weighted in accordance to their contribution. As a consequence, such partially contributing bits might have a lower impact on the bit of the second digital signal.

Regardless the weighting of partially contributing bits, the post-processing unit may be configured to weight a leading bit and/or a tail bit of the plurality of bits of the digital signal. As a consequence, the impact of such bits on the determination of the bit of the second digital signal might be decreased. This may be beneficial in order to attenuate a possibly negative transient behavior of the optical receiver.

The optical receiver, in particular the high bitrate optical receiver, may comprise a clock and data recovery circuit configured to determine the clock of the first optical signal component. In other words, the clock and data recovery circuit may be configured to determine the clock associated with the high bitrate. The clock and data recovery circuit may be configured to determine the clock associated with the high bitrate from the second optical signal component. For this purpose, the clock and data recovery circuit may take into account the N/M ratio between the high bitrate and the low bitrate. In an embodiment, the clock and data recovery circuit analyzes every M^{th} edge of the second signal component which is aligned with every N^{th} edge of the clock associated with the high bitrate. Alternatively or in addition, the clock and data recovery circuit may be configured to move, e.g. delay or move forward, an edge of the second signal component by a predetermined value, in order to align the edge with an edge of the clock associated with the high bitrate. The predetermined value may be associated with the ratio N/M.

The post-processing unit may be configured to determine the clock of the second optical signal component from the clock of the first optical signal component. In particular, the post-processing unit may be configured to determine the clock of M bits of the second digital signal from the clock of N bits of the first digital signal.

According to a further aspect, a PON optical line terminal (OLT) is described. The OLT may comprise an optical transmitter configured to transmit an optical downstream signal to a plurality of optical network units (ONU) or optical network terminals (ONT). The OLT may further comprise an optical multi-rate receiver configured to receive an optical upstream signal from the plurality of ONUs or ONTs. The optical multi-rate receiver may comprise any of the aspects and/or features outlined in the present document.

According to another aspect, a method for receiving or decoding an optical multi-rate signal is described. The optical multi-rate signal comprises a first optical signal component at a high bitrate and a second optical signal component at a low bitrate, wherein the first and second optical signal components are time-multiplexed. The method may comprise converting the optical multi-rate signal into a digital signal having the high bitrate. It may further comprise converting the digital signal corresponding to the second optical signal component into a second digital signal having the low bitrate.

It should be noted that the above mentioned aspects may be combined with one another or extracted from one another in various ways. In particular, all possible claim and feature combinations are considered to be disclosed by the present document. Furthermore, the aspects and features outlined in relation with a system, e.g. a receiver, are equally applicable in relation to the corresponding method.

The objects and features of the invention will become apparent from the following description of examples. The present invention is described in the following by referring to exemplary embodiments illustrated schematically in the accompanying figures, wherein
Fig. 1 illustrates an exemplary PON network;
Fig. 2 shows an exemplary multi-rate signal;
Fig. 3 shows an exemplary digital multi-rate receiver; and
Fig. 4a and 4b illustrate exemplary relations between the bits of a low bitrate signal and the bits of a high bitrate signal.

GPON takes advantage of Wavelength Division Multiplexing (WDM), using one wavelength for downstream traffic and another for upstream traffic on a single standard single-mode fiber (ITU-T G.652). The specification calls for downstream traffic to be transmitted on the 1490 (±10) nanometer (nm) wavelength and upstream traffic to be transmitted at 1310 (±50) nm. The 1550 nm band is allocated for optional overlay services, typically RF video (in the range 1550-1560 nm). Furthermore, GPON is a shared network, in that the OLT sends a single stream of downstream traffic that is received by all ONTs. Each ONT only reads the content of those packets that are addressed to it. Encryption may be used to prevent eavesdropping on downstream traffic.

The OLT and in particular the multiple access controller is responsible for allocating upstream bandwidth to the ONTs. Because the Optical Distribution Network (ODN) is shared, ONT upstream transmissions could collide if they were transmitted at random times. ONTs can be located at varying distances from the OLT, meaning that the transmission delay from each ONT may be different. The OLT measures the delay and sets a register in each ONT via PLOAM (Physical Layer Operations and Maintenance) messages to equalize its delay with respect to all of the other ONTs on the PON. Once the delay of all ONTs has been equalized, the OLT transmits so-called grants to the individual ONTs. A grant is a permission to use a defined interval of time, i.e. a defined time slot, for upstream transmission. The grant map is dynamically recalculated every few milliseconds. The map allocates bandwidth to all ONTs, such that each ONT receives timely bandwidth for its service needs.

Some services - POTS, for example - require essentially constant upstream bandwidth, and the OLT may provide a fixed bandwidth allocation to each such service that has been provisioned. But most data traffic - internet access, for example - is bursty and highly variable. A given ONT only transmits optical packets when it is allocated a time slot and when it needs to transmit. Whereas the time of reception for a single burst at the OLT is known from the grant allocation algorithm, the bit phases are typically variable and unknown from burst to burst. Besides the characteristics of random bit phases in the burst mode packets, there is also an issue with regard to the optical power of the received bursts. Since the link losses (due to distance and split ratio) between the OLT and ONTs are not identical for all ONTs and since the ONT transmit powers are variable within a typically 5 dB tolerance range, the optical bursts received by the OLT have different powers. In order to account for the phase variation and power variation in a short time, special burst mode clock and data recovery circuits (BM-CDR) and burst mode amplifiers (e.g., burst mode transimpedance amplifiers (TIA)) may need to be employed.

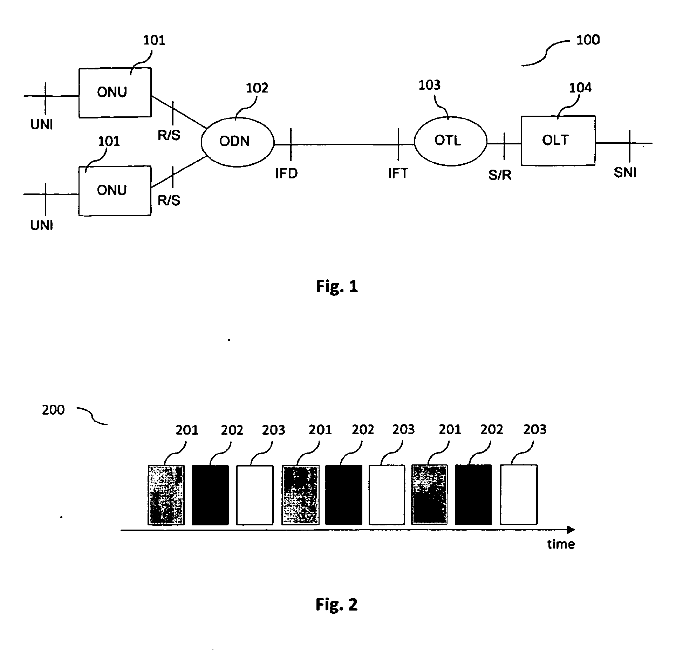

Fig. 1 illustrates an exemplary PON network 100 with Optical Network Units (ONU) or Optical Network Terminals (ONT) 101 providing a User Network Interface (UNI). The ONUs 101 are connected to the Optical Distribution Network (ODN) 102 which may be implemented by an optical splitter/combiner. Via an Optical Trunk Line (OTL) 103 the ONUs 101 are connected to the Optical Line Terminal (OLT) 104. As outlined above, the OLT 104 receives time multiplexed optical bursts on the upstream link from a plurality of ONUs 101. The ONUs 101 may transmit at various upstream bitrates. In case of GPON the ONUs 101 may transmit data e.g. at 1.244 Gbit/s or at 2.488 Gbit/s. Furthermore, upstream bitrates of 9.952 Gbit/s are expected in the near future. In a similar manner, GEPON ONUs 101 may transmit upstream traffic at various bitrates, e.g. at 1.25 Gbit/s or 10.3125 Gbit/s. Consequently, the OLT 104 receives a time multiplexed optical upstream signal comprising a sequence of optical bursts of different bitrates. The optical receiver of the OLT 104 should be configured to receive such multiple bitrates signals.

Fig. 2 illustrates an exemplary multi-rate signal 200. The bursts 201 of a first ONU 101 sending upstream traffic at 1.244 Gbit/s are time multiplexed with bursts 202 of a second ONU 101 sending upstream traffic at 9.952 Gbit/s and with bursts 203 of a third ONU 101 sending traffic at 2.488 Gbits/s. Such multi-rate signals 200 are received by the optical receiver of the OLT 104.

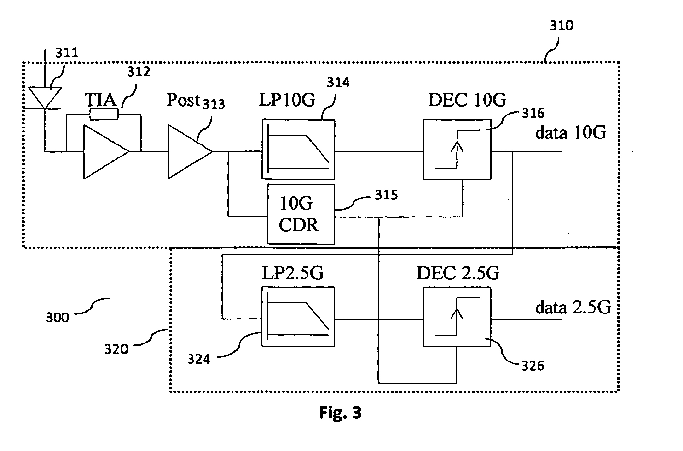

Fig. 3 shows a block diagram of an exemplary digital dual rate receiver 300. For example, optical bursts with 2.5G and 10G, i.e. 2.488 Gbit/s and 9.952 Gbit/s in case of ITU-T based PON, are received in a 10G receiver 310. In an embodiment, the 10G receiver 310 is a conventional 10G receiver. Such a conventional 10G receiver 310 typically comprises a burst-mode avalanche photodiode (APD) 311 for the optical to electrical conversion. The receiver 310 may also comprise a transimpedance amplifier (TIA) 312 in order to account for the power variations of the different optical bursts. Furthermore, the 10G receiver 310 may comprise an additional post-amplifier 313 and an optical low pass filter 314, in order to remove undesirable high frequency components from the analog electrical signal.

A clock and data recovery circuit (CDR) 315 is used to determine the signal clock from the received optical signal, i.e. from the converted analog electrical signal. This may be done based on phase-locked loop (PLL) or surface acoustic wave filter techniques. When a multi-rate signal such as the multi-rate signal 200 shown in Fig. 2 is received, the CDR 315 will have to detect the clock from the plurality of bursts 201, 202, 203 of different bitrates. A CDR 315 designed for 10G signals will be able to detect the 10G clock of the 10G bursts 202. The lower bitrate bursts 201, 203 can be regarded as long consecutive identical digit signals to be analyzed by the 10G CDR 315. Notably in cases where the multiple bitrates are integral multiples of each other, the CDR 315 will be able to maintain and/or synchronize its 10G clock. By way of example, in case of 1.244 Gbit/s, 2.488 Gbit/2, 9.952 Gbit/s multi-rate signals, a CDR 315 which is designed for 9.952 Gbit/s signals will be able to correctly synchronized and/or maintain its 10G clock based on the 2.488 Gbit/s bursts which are exactly 4 times slower than the 9.952 Gbit/s clock. In a similar manner, the clock of the 1.244 Gbit/s bursts is exactly 8 times slower than the 9.952 Gbit/s clock. As a matter of fact, the CDR 315 can make use the coinciding slopes of the 2.488 Gbit/s bursts and the 1.244 Gbit/s bursts with the 9.952 Gbit/s clock.

The actual clocks of the lower bitrate bursts 201, 203 may be determined in a separate division unit (not shown in Fig. 3) which divides the higher bitrate clock, e.g. the 10G clock, into lower bitrate clocks, e.g. the 2.5G clock or the 1.25G clock. By consequence, a conventional 10G CDR 315 can also be used for the detection of the clocks of the lower bitrate bursts 201 and 203.

Eventually, the multi-rate signal 200 is decoded in a 10G decision unit 316, which may employ 3G regeneration, i.e. reshaping, reamplification and retiming. The 10G decision unit 316 analyzes the amplified and filtered analog electrical signal according to the clocking information provided by the CDR 315. By taking into account the underlying modulation scheme (e.g. binary on/off keying), the 10G decision unit 316 makes a decision with regards to the constellation point corresponding to the received symbol. The output of the decision unit 316 is a digital 10G bitstream, i.e. the optical multi-rate signal 200 is converted into a uniform 10G bitsstream. This uniform 10G bitstream comprises, however, time segments which correspond to lower bitrate bitstream, i.e. 1.25G bitstreams and 2.5G bitstreams. These signals may be determined or decoded in a post-processing unit 320 following the 10G receiver 310.

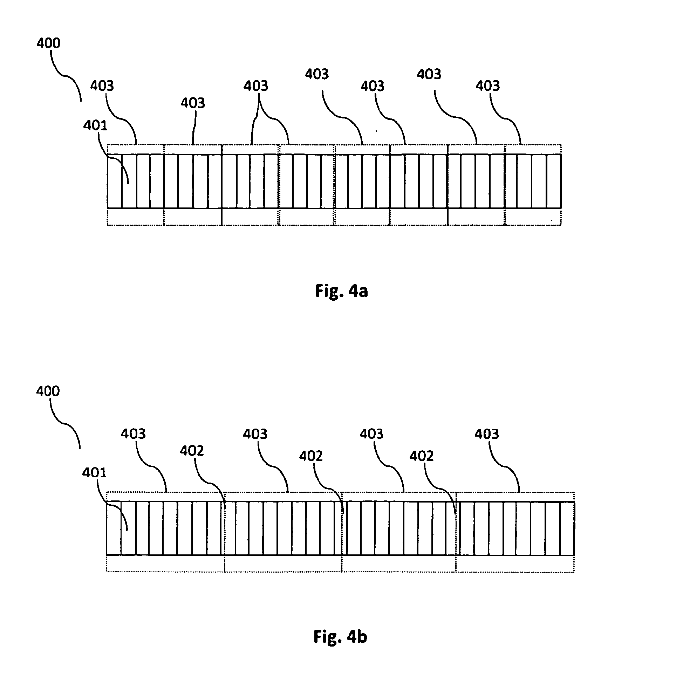

In an embodiment, the post-processing unit 320 comprises an averaging unit 324 which reconstructs the lower bitrate bitstream, e.g. the 1.25G or 2.5G bitstream, from the high bitrate bitstream, e.g. the 10G bitstream. In the case that the different bitrates are multiples of each other, e.g. in the case of 1.244 Gbit/s, 2.488G bit/s and 9.952Gbit/s bitstreams, the 2.488Gbit/s bitstreams can be obtained by averaging over the 4 10G bits (9.952 Gbit/s bit) which correspond to one 2.5G bit (2.488 Gbit/s bit). This is shown in Fig. 4a, where a sequence 400 of 10G bits 401 is illustrated. It can be seen that 410G bits 401 may be regrouped to obtain one 2.5G bit 403.

The averaging could be done by low pass filtering of the (noiseless) 10G bitstream. In other words, the 10G bitstream could be converted into an analog 10G signal which is submitted to a low pass filter having a cut-off frequency which is associated with the ratio between the higher bitrate and the lower bitrate. Alternatively, the averaging could be performed mathematically directly on the digital 10G bitstream in a digital processor. In a similar manner, 1.244 Gbit/s bitstream could be determined from the 9.952 Gbit/s bitstream by averaging over the 8 9.952 Gbit/s bits corresponding to one 1.244 Gbit/s bit.

It should be noted that the averaging unit 324 may determine a weighted average of a group of bits of the higher bitrate bitsteam. For this purpose the bits of the higher bitrate bitstream, e.g. the 10G bitstream, may be multiplied with weights. In an embodiment, the weights could emphasize the central bits or attenuate the leading and/or tail bits of a group of bits of the higher bitrate bitstream. Such weighting may be used to account for transient effects of the receiver 310.

The output of the averaging operation is an averaged data signal which may comprise other values than "0" and "1". Therefore, the lower bitrate bitstream is determined from the averaged data signal in a lower bitrate decision unit 326. This lower bitrate decision unit 326 evaluates the averaged data signal and makes a decision on the value of the bits of the lower bitrate bitstream. For this purpose the clock information determined in the burst mode CDR 315 is forwarded to the decision unit 326. In case of bitrates which are integral multiples of one another, the clock may be divided by the respective integer ratio, e.g. 4 or 8 in the case of 1.244 Gbit/s, 2.488 Gbit/s and 9.952 Gbit/s multi-rate signals.

By way of example, the output of the 10G receiver 310 may have provided a digital signal at alOG clock rate which comprises a sequence of bits "1, 1, 1, 0" corresponding to one bit of a burst at 2.5G. The averaging unit 324 would determine the average value of the sequence of bits which would lead to the averaged data signal value 0.75. The decision unit 326 would make a decision with regards to the bit value, i.e. it would decide that the averaged data signal value corresponds to a bit value of "1". As such, an exemplary implementation of the decision unit 326 could comprise the decision rule: output bit = "1", if averaged value >= 0.5; and output bit = "0" otherwise. In general terms, the decision unit 326 may make use of a threshold, in order to convert the averaged data signal into a bitstream.

In the following, estimations of BER (bit error ratio) of the described multi-rate receiver for 1.25G and 2.5G signals are made. As already mentioned above, in the case that the different bitrates are integral multiples of each other, one 2.5G bit comprises exactly 4 10G bits. If there is just one error in the four bits, the error can be corrected (3 bits "1" and one bit "0" gives "1") as an outcome of the averaging operation. If there are two errors, there will be a chance of 50% for a correct decision. In a similar manner, one 1.25G bit comprises exactly 8 10G bits. Consequently, 3 bit errors can be corrected completely and 4 errors can be corrected with a 50% probability. It should be noted that other correction and/or decision schemes may be used in the post processing unit 320 and may lead to other BER results.

Using the above observations, the BERs for the different bitrates can be calculated given the 10G BER. This is shown in Table 1. If the BER at 10G is le-6, then the probability to have 1 error in 4 bits is 4e-6, whereas the probability to have 2 errors in 4 bits is 1.6e-11. This results in a BER at 2.5G of 8e-12. In a similar manner, the BER at 1.25G can be determined to be 2e-21.

**Table 1**

| BER 10G | P _{1error in 4 bit} | P _{2 errors in 4 bit} | BER 2.5G | P _{2 errors in 8 bit} | BER 1.25G |
|---|---|---|---|---|---|
| 1e-1 | 4e-1 | 1.6e-1 | 8e-2 | 4e-1 | 2e-1 |
| 1e-2 | 4e-2 | 1.6e-3 | 8e-4 | 4e-5 | 2e-5 |
| 1e-3 | 4e-3 | 1.6e-5 | 8e-6 | 4e-9 | 2e-9 |
| 1e-6 | 4e-6 | 1.6e-11 | 8e-12 | 4e-21 | 2e-21 |
| 1e-7 | 4e-7 | 1.6e-13 | 8e-14 | | |
| *1e-9* | 4e-9 | 1.6e-17 | 8e-18 | | |
| 1e-12 | | | | | |

The above BERs for the multi-rate receiver can be used to determine the receiver sensitivity.

At the same time, the receiver sensitivity at 10G, i.e. the receiver sensitivity for a 10G signal, remains unchanged, because a conventional 10G receiver may be used without modification. In other words, the proposed scheme does not introduce any penalty for the reception or decoding of 10G bursts. In particular, no bitrate dependant switching of the APD, the TIA feedback resistance and the low-pass filter is required. Consequently, there is no penalty of the proposed multi-rate receiver for the high bitrate reception/decoding.

Even though the multi-rate receiver has been described in the context of multi-rate signals having bitrates which are integral multiples of each other, it should be noted that the multi-rate receiver is also applicable to multi-rate signals having bitrates of arbitrary rational ratios. As a matter of fact, the ratio between the bitrates mainly impacts the post processing of the clock data received from the CDR 315. This post processing and in particular the division unit may need to be configured to determine the clocks of the different signal components. By way of example, the IEEE PON systems are considered. IEEE typically assumes 1:10 ratios between different bitrates. However, due to the used linecode a 1 Gbit/s signal becomes a 1.25 Gbit/s signal using the 8B/10B linecode. In a similar manner a 10 Gbit/s signal becomes a 10.3125 Gbit/s signal when using the 64B/66B linecode. As such, the ratio between the two signals is 8.25, i.e. the edges of a group of four (4) 1.25 Gbit/s bits correspond to the edges of a group of 33 10.3125 Gbit/s bits. Consequently, a CDR 315 determining the clock of the 10.3125 Gbit/s signal components can also maintain and/or synchronize the clock on the 1.25 Gbit/s signal components in view of the 33/4 ratio outlined above. In other words, the burst mode CDR 315 working at 10.3125 Gbit/s can associate 33 bits of the 10.3125 Gbit/s signal component to 4 bits of the 1.25 Gbit/s signal component.

The synchronization/maintenance of the clock of the 10.3215 Gbit/s signal component during the reception of a 1.25 Gbit/s signal component may require an adaption of the 10G CDR 315, such that the CDR 315 takes into account the 33/4 ratio of the bitrate of the two signal components. By way of example, the CDR 315 may be configured to ignore the (three) intermediate edges of the 1.25 Gbit/s signal and only focus on the edges of the 1.25 Gbit/s signal which are aligned with the edges of a group of 33 10.3125 Gbit/s bits. Alternatively, the CDR 315 may be configured to move forward and/or delay the (three) intermediate edges of the 1.25 Gbit/s signal by a predetermined value, in order to bring them into alignment with one of the edges of the 10.3125 Gbit/s signal. The predetermined value may be 25%, 50% or 75% of the clock of the 10.3125 Gbit/s signal as outlined below in the context of Fig. 4b.

The 33/4 ratio may also be used by the post processing unit 320, e.g. within a decision unit, to determine the clock of the lower bitrate signal.

During post-processing, the bits of the lower-rate signal components can be determined in an averaging unit 324 and in a decision unit 326. For this purpose, 8.25 bits of a group of 33 10.3125 Gbit/s bits may be averaged. This is shown in Fig. 4b, where a group 400 of 33 10.3125 Gbit/s bits 401 is illustrated. It can be seen that the 4 1.25G bits 403 can be obtained from 8.25 10.3125 Gbit/s bits 401. It can also be seen that three of the 10.3125 Gbit/s bits (specifically referenced as 402) contribute to two neighboring 1.25 Gbit/s bits 403. This partial contribution of the border bits 403 should be considered during the averaging operation, e.g. by multiplying the border bits 403 according to their contribution to the 1.25 Gbit/s bit 403. In an embodiment, the bit contributing with 0.25 could be multiplied with 25%, a bit contributing with 0.5 could be multiplied with 50%, a bit contributing with 0.75 could be multiplied with 75% and a fully contributing bit could be multiplied with 100%.

The clock information is also passed to the decision unit 326. In case of the above example, the decision unit 326 is configured to determine 4 1.25G bits within a period defined by 33 10.3125 Gbit/s bits.

The above described multi-rate receiver can be implemented at low computational complexity. In particular, the digital multi-rate receiver structure proposed here is less complex than an analog multi-rate receiver which requires switching of APD, TIA and filter. The proposed digital multi-rate receiver may make use of a conventional high bitrate receiver followed by digital post-processing in order to determine the lower bitrate data. The post-processing of the digital high rate signal may be performed via software, e.g. within an FPGA, or using an ASIC.

Overall, an optical multi-rate receiver has been described which efficiently decodes optical signals comprising time-multiplexed optical bursts at different bitrates. The receiver has no sensitivity penalties for the reception of the high bitrate components of the optical signal compared to a conventional single-rate receiver. At the same time, sensitivity gains which are close to the theoretically achievable gains may be achieved for the decoding of the lower bitrate signal components. Futhermore, the proposed optical multi-rate receiver has low complexity.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An optical multi-rate receiver (300) configured to receive an optical multi-rate signal (200) comprising a first optical signal component (202) at a high bitrate and a second optical signal component (201, 203) at a low bitrate, wherein the first (202) and second (201, 203) optical signal components are time-multiplexed, the receiver **characterised by**
- a high bitrate optical receiver (310) for converting the optical multi-rate signal into a first digital signal having the high bitrate; the first digital signal comprising a digital signal portion corresponding to the second optical signal component; and
- a post-processing unit (320) for converting the digital signal portion into a second digital signal having the low bitrate.

2. The receiver (300) of claim 1, wherein the high bitrate and the low bitrate have a ratio of N to M, with N and M being integer numbers and N > M.

3. The receiver (300) of claim 2, wherein the post-processing unit (320) is configured to determine a bit of the second digital signal from a plurality of bits of the first digital signal.

4. The receiver (300) of claim 3, wherein the post-processing unit (320) is configured to determine the bit of the second digital signal using an average of a predetermined number of bits of the first digital signal.

5. The receiver (300) of claims 3 or 4, wherein
- the bit of the second digital signal is determined from N/M bits of the first digital signal.

6. The receiver (300) of claim 5, wherein a bit from the N/M bits of the first digital signal, which only contributes partially to the bit of the second digital signal, is weighted in accordance to its contribution.

7. The receiver (300) of any of claims 3 to 6, wherein a leading bit and a tail bit of the plurality of bits of the first digital signal are weighted to decrease their impact for the determination of the bit of the second digital signal.

8. The receiver (300) of any of claims 2 to 7, wherein the post-processing unit (320) is implemented as software on a FPGA or as an ASIC.

9. The receiver (300) of any of claims 2 to 7, wherein the post-processing unit (320) comprises:
- an averaging unit (324) configured to average a plurality of bits of the first digital signal; and
- a low bitrate decision unit (326) configured to determine a bit of the second digital signal from the plurality of bits of the first digital signal.

10. The receiver (300) of any of claims 2 to 9, wherein
- the optical multi-rate signal (200) is a PON signal from a plurality of optical network units (101); and
- the high bitrate is 9.952 Gbit/s or 2.488 Gbit/s and the low bitrate is 2.488 Gbit/s or 1.244 Gbit/s; or
- the high bitrate is 10.3125 Gbit/s and the low bitrate is 1.25 Gbit/s.

11. The receiver (300) of any of claims 2 to 10, wherein the high bitrate optical receiver (310) comprises:
- a clock and data recovery circuit (315) configured to determine the clock of the first optical signal component.

12. The receiver (300) of claim 11, wherein
- the post-processing unit (320) is configured to determine the clock of the second optical signal component from the clock of the first optical signal component.

13. The receiver (300) of any previous claim, wherein the high bitrate optical receiver (310) comprises:
- a burst-mode avalanche photodiode (311);
- a transimpedance amplifier (312);
- a post-amplifier (313);
- a low pass filter (314); and
- a high bitrate decision unit (316) configured to generate the first digital signal at the high bitrate.

14. A PON optical line terminal (104) comprising:
- an optical transmitter configured to transmit an optical downstream signal to a plurality of optical network units (101); and
- an optical multi-rate receiver according to any of claims 1 to 13, configured to receive an optical upstream signal from the plurality of optical network units (101).

15. A method for decoding an optical multi-rate signal (200) comprising a first optical signal component (202) at a high bitrate and a second optical signal component at a low bitrate (201, 203), wherein the first (202) and second (201, 203) optical signal components are time-multiplexed, the method **characterised by**:
- converting the optical multi-rate signal into a first digital signal having the high bitrate; the first digital signal comprising a digital signal portion corresponding to the second optical signal component; and
- converting the digital signal portion into a second digital signal having the low bitrate.

## Patentansprüche

1. Optischer Mehrratenempfänger (300), konfiguriert für den Empfang eines optischen Mehrratensignals (200), umfassend einen ersten optischen Signalanteil (202) mit einer hohen Bitrate und einem zweiten optischen Signalanteil (201, 203) mit einer niedrigen Bitrate, wobei der erste (202) und der zweite (201, 203) optische Signalanteil zeitlich gemultiplext sind, wobei der Empfänger **gekennzeichnet ist durch**
- einen optischen Empfänger (310) für hohe Bitraten zum Umwandeln des optischen Mehrratensignals in ein erstes digitales Signal mit der hohen Bitrate; wobei das erste digitale Signal einen digitalen Signalabschnitt umfasst, welcher dem zweiten optischen Signalanteil entspricht; und
- eine Nachverarbeitungseinheit (320) zum Umwandeln des digitalen Signalabschnitts in ein zweites digitales Signal mit der niedrigen Bitrate.

2. Empfänger (300) nach Anspruch 1, wobei die hohe Bitrate und die niedrige Bitrate ein Verhältnis von N zu M aufweisen, wobei N und M ganze Zahlen sind und N > M ist.

3. Empfänger (300) nach Anspruch 2, wobei die Nachverarbeitungseinheit (320) für das Bestimmen eines Bits des zweiten digitalen Signals aus einer Mehrzahl von Bits des ersten digitalen Signals konfiguriert ist.

4. Empfänger (300) nach Anspruch 3, wobei die Nachverarbeitungseinheit (320) für das Bestimmen des Bits des zweiten digitalen Signals unter Verwendung eines Durchschnitts einer vorbestimmten Anzahl von Bits des ersten digitalen Signals konfiguriert ist.

5. Empfänger (300) nach Anspruch 3 oder 4, wobei
- das Bit des zweiten digitalen Signals aus N/M Bits des ersten digitalen Signals bestimmt wird.

6. Empfänger (300) nach Anspruch 5, wobei ein Bit aus den N/M Bits des ersten digitalen Signals, welches nur teilweise zu dem Bit des zweiten digitalen Signals beiträgt, gemäß seinem Beitrag gewichtet wird.

7. Empfänger (300) nach einem beliebigen der Ansprüche 3 bis 6, wobei ein führendes Bit und ein Endbit der Mehrzahl von Bits des ersten digitalen Signals gewichtet werden, um deren Einfluss auf die Bestimmung des Bits des zweiten digitalen Signals zu mindern.

8. Empfänger (300) nach einem beliebigen der Ansprüche 2 bis 7, wobei die Nachverarbeitungseinheit (320) als Software auf einem FPGA oder als eine ASIC implementiert wird.

9. Empfänger (300) nach einem beliebigen der Ansprüche 2 bis 7, wobei die Nachverarbeitungseinheit (320) umfasst:
- Eine Mittelungseinheit (324), konfiguriert für die Mittelung einer Mehrzahl von Bits des ersten digitalen Signals; und
- eine Entscheidungseinheit für niedrige Bitraten (326), konfiguriert für das Bestimmen eines Bits des zweiten digitalen Signals aus der Mehrzahl von Bits des ersten digitalen Signals.

10. Empfänger (300) nach einem beliebigen der Ansprüche 2 bis 9, wobei
- das optische Mehrratensignal (200) ein PON-Signal von einer Mehrzahl von optischen Netzwerkeinheiten (101) ist; und
- die hohe Bitrate 9.952 Gbit/s oder 2.488 Gbit/s beträgt, und die niedrige Bitrate 2.488 Gbit/s oder 1.244 Gbit/s beträgt; oder
- die hohe Bitrate 10.3125 Gbit/s beträgt, und die niedrige Bitrate 1.25 Gbit/s beträgt.

11. Empfänger (300) nach einem beliebigen der Ansprüche 2 bis 10, wobei der optische Empfänger für hohe Bitraten (310) umfasst:
- Eine Takt- und Datenrückgewinnungsschaltung (315), konfiguriert für das Bestimmen des Taktes des ersten optischen Signalanteils.

12. Empfänger (300) nach Anspruch 11, wobei
- die Nachverarbeitungseinheit (320) für das Bestimmen des Taktes des zweiten optischen Signalanteils aus dem Takt des ersten optischen Signalanteils konfiguriert ist.

13. Empfänger (300) nach einem beliebigen der vorstehenden Ansprüche, wobei der optische Empfänger für hohe Bitraten (310) umfasst:
- Eine Burst-Mode-Avalanche-Photodiode (311);
- einen Transimpedanzverstärker (312);
- einen Nachverstärker (313);
- einen Tiefpassfilter (314); und
- eine Entscheidungseinheit für hohe Bitraten (316), konfiguriert für das Erzeugen des ersten digitalen Signals mit der hohen Bitrate.

14. Optisches PON-Leitungsendgerät (104), umfassend:
- Einen optischen Sender, konfiguriert für die Übertragung eines optischen Downstream-Signals an eine Mehrzahl von optischen Netzwerkeinheiten (101); und
- einen optischen Mehrraten-Empfänger gemäß einem beliebigen der Ansprüche 1 bis 13, konfiguriert für den Empfang eines optischen Upstream-Signals von der Mehrzahl von optischen Netzwerkeinheiten (101).

15. Verfahren zum Decodieren eines optischen Mehrratensignals (200), welches einen ersten optischen Signalanteil (202) mit einer hohen Bitrate und einen zweiten optischen Signalanteil mit einer niedrigen Bitrate (201, 203) umfasst, wobei der erste (202) und der zweite (201, 203) optische Signalanteil zeitlich gemultiplext sind, wobei das Verfahren **gekennzeichnet ist durch**:
- Umwandeln des optischen Mehrratensignals in ein erstes digitales Signal mit einer hohen Bitrate; wobei das erste digitale Signal einen digitalen Signalabschnitt umfasst, welcher dem zweiten optischen Signalanteil entspricht; und
- Umwandeln des digitalen Signalabschnitts in ein zweites digitales Signal mit der niedrigen Bitrate.

## Revendications

1. Récepteur multidébit optique (300) configuré pour recevoir un signal multidébit optique (200) comprenant une première composante de signal optique (202) à haut débit et une deuxième composante de signal optique (201, 203) à bas débit, dans lequel la première (202) et la deuxième (201, 203) composantes de signal optique sont multiplexées dans le temps, le récepteur étant **caractérisé par**
- un récepteur optique à haut débit (310) pour convertir le signal multidébit optique en un premier signal numérique à haut débit ; le premier signal numérique comprenant une partie de signal numérique correspondant à la deuxième composante de signal optique ; et
- une unité de post-traitement (320) pour convertir la partie de signal numérique en un deuxième signal numérique à bas débit.

2. Récepteur (300) selon la revendication 1, dans lequel le haut débit et le bas débit ont un rapport N sur M, N et M étant des nombres entiers et N > M.

3. Récepteur (300) selon la revendication 2, dans lequel l'unité de post-traitement (320) est configurée pour déterminer un bit du deuxième signal numérique à partir d'une pluralité de bits du premier signal numérique.

4. Récepteur (300) selon la revendication 3, dans lequel l'unité de post-traitement (320) est configurée pour déterminer le bit du deuxième signal numérique en utilisant une moyenne d'un nombre prédéterminé de bits du premier signal numérique.

5. Récepteur (300) selon la revendication 3 ou 4, dans lequel
- le bit du deuxième signal numérique est déterminé à partir des NIM bits du premier signal numérique.

6. Récepteur (300) selon la revendication 5, dans lequel un bit parmi les NIM bits du premier signal numérique, qui ne contribue que partiellement au bit du deuxième signal numérique, est pondéré en fonction de sa contribution.

7. Récepteur (300) selon l'une quelconque des revendications 3 à 6, dans lequel un bit de gauche et un bit de queue parmi la pluralité de bits du premier signal numérique sont pondérés afin de diminuer leur impact pour la détermination du bit du deuxième signal numérique.

8. Récepteur (300) selon l'une quelconque des revendications 2 à 7, dans lequel l'unité de post-traitement (320) est mise en oeuvre en tant que logiciel dans un circuit FPGA ou en tant que circuit ASIC.

9. Récepteur (300) selon l'une quelconque des revendications 2 à 7, dans lequel l'unité de post-traitement (320) comprend :
- une unité de calcul de la moyenne (324) configurée pour calculer la moyenne d'une pluralité de bits du premier signal numérique ; et
- une unité de décision à bas débit (326) configurée pour déterminer un bit du deuxième signal numérique à partir de la pluralité de bits du premier signal numérique.

10. Récepteur (300) selon l'une quelconque des revendications 2 à 9, dans lequel
- le signal multidébit optique (200) est un signal de PON provenant d'une pluralité d'unités de réseau optique (101) ; et
- le haut débit est de 9,952 Gbit/s ou de 2,488 Gbit/s et le bas débit est de 2,488 Gbit/s ou de 1,244 Gbit/s ; ou
- le haut débit est de 10,3125 Gbit/s et le bas débit est de 1,25 Gbit/s.

11. Récepteur (300) selon l'une quelconque des revendications 2 à 10, dans lequel le récepteur optique à haut débit (310) comprend :
- un circuit de récupération d'horloge et de données (315) configuré pour déterminer l'horloge de la première composante de signal optique.

12. Récepteur (300) selon la revendication 11, dans lequel
- l'unité de post-traitement (320) est configurée pour déterminer l'horloge de la deuxième composante de signal optique à partir de l'horloge de la première composante de signal optique.

13. Récepteur (300) selon l'une quelconque des revendications précédentes, dans lequel le récepteur optique à haut débit (310) comprend :
- une photodiode à avalanche à mode rafale (311)
- un amplificateur à transimpédance (312) ;
- un post-amplificateur (313) ;
- un filtre passe-bas (314) ; et
- une unité de décision à haut débit (316) configurée pour générer le premier signal numérique à haut débit.

14. Terminal de ligne optique (104) de PON comprenant :
- un émetteur optique configuré pour transmettre un signal optique descendant à une pluralité d'unités de réseau optique (101) ; et
- un récepteur multidébit optique selon l'une quelconque des revendications 1 à 13, configuré pour recevoir un signal optique montant provenant de la pluralité d'unités de réseau optique (101).

15. Procédé pour décoder un signal multidébit optique (200) comprenant une première composante de signal optique (202) à haut débit et une deuxième composante de signal optique à bas débit (201, 203), dans lequel la première (202) et la deuxième (201, 203) composantes de signal optique sont multiplexées dans le temps, le procédé étant **caractérisé par** les étapes suivantes :
- convertir le signal multidébit optique en un premier signal numérique à haut débit ; le premier signal numérique comprenant une partie de signal numérique correspondant à la deuxième composante de signal optique ; et
- convertir la partie de signal numérique en un deuxième signal numérique à bas débit.
